# EUROPÄISCHE PATENTSCHRIFT

(11) **EP 1 716 735 B1**
(45) Veröffentlichungstag und Bekanntmachung des Hinweises auf die Patenterteilung: **19.11.2014**
(21) Anmeldenummer: 06008567.7
(22) Anmeldetag: 25.04.2006
(51) Int. Cl.: A01D 34/86

(54) **Verfahren und Vorrichtung zur Höhensteuerung**
Method and device for adjusting height
Prodédé et dispositif pour le réglage de la hauteur

(30) Priorität: 25.04.2005 DE 102005019109
(43) Veröffentlichungstag der Anmeldung: 02.11.2006
(73) Patentinhaber: MULAG Fahrzeugwerk Heinz Wössner GmbH & Co. KG, 77728 Oppenau (DE)
(72) Erfinder: Müller, Alfred, 77728 Oppenau (DE)
(74) Vertreter: Alber, Norbert

(56) Entgegenhaltungen:
- EP-A- 0 682 856
- EP-A- 0 722 654
- EP-A- 1 062 857
- DE-A1- 3 218 525
- GB-A- 2 251 536
- US-A1- 2003 024 224

## Beschreibung

### I. Anwendungsgebiet

Die Erfindung betrifft eine Steuerung, insbesondere eine Höhensteuerung, für einen über dem Untergrund geführten Arbeitskopf.

### II. Technischer Hintergrund

In vielen Anwendungsfällen wird der Untergrund bearbeitet, beispielsweise der Boden gekehrt oder der Bewuchs des Bodens gemäht, mittels eines Arbeitskopfes, der - z. B. an einem Arbeitsfahrzeug befestigt - über dem Untergrund geführt wird.

Wenn es sich dabei nicht um vollständig künstlich eingeebneten Untergrund handelt, ist hierfür eine Erkennung der Kontur des zu bearbeitenden Untergrunds und/oder dessen Bewuchses in Arbeitsrichtung vor dem Arbeitskopf notwendig und eine entsprechende Steuerung des Arbeitskopfes hinsichtlich Höhenlage, Seitenkippung, Schrägstellung in der Aufsicht und/oder Drehzahl, Drehmoment und Arbeitsgeschwindigkeit in Arbeitsrichtung notwendig.

Je ungleichmäßiger der Untergrund und/oder der zu beachtende Bewuchs des Untergrundes hinsichtlich Höhe und Struktur ist, umso eher erfolgt dies nach wie vor von Hand.

Ein typischer Fall für eine derartige Anwendung ist der am vorderen Ende eines Auslegerarmes von einem Arbeitsfahrzeug geführte Mähkopf eines Auslegermähgerätes, insbesondere eines Randstreifen-Mähgerätes, mit dessen Hilfe neben dem Straßenrand der Bewuchs der Grünflächen gemäht wird, weshalb im Folgenden an Stelle des Begriffes "Arbeitskopf" die konkrete Bezeichnung "Mähkopf" verwendet wird, ohne die Erfindung auf diesen Anwendungsfall zu beschränken.

Bei einem derartigen Mähkopf erfolgt im Stand der Technik die Abtastung des Untergrundes dadurch, dass am Gehäuse des Mähkopfes, in Arbeitsrichtung allerdings hinter dem Mähwerk, eine Abtastwalze befestigt ist, die auf dem Untergrund aufliegt. Auf Grund einer federnden Aufhängung der Abtastwalze am Gehäuse und/oder eines damit verbundenen Kraftsensors oder Drucksensors wird sichergestellt, dass die Abtastwalze und damit der Mähkopf nicht zu stark gegen den Boden gepresst wird und in diesem Sinne über die meist mittels Hydraulikzylinder relativ zueinander verstellten und in Position gehaltenen Teile des Auslegerarmes der Mähkopf mit einer vorgegebenen Kraft bzw. Druck auf dem Untergrund aufliegt.

Kippstellungen des Mähkopfes zur Seite um eine in Längsrichtung verlaufende horizontale Kippachse, Schrägstellungen des Mähkopfes in der Aufsicht betrachtet, also schräg zur Arbeitsrichtung, müssen ebenso manuell vom Bediener vorgegeben werden wie ein Anheben des Mähkopfes vor relativ steil aufragenden Erhebungen, wenn das Ansteigen der Erhebung so steil ist, dass die hinter dem Mähwerk angeordnete Abtastwalze ein Hineinfräsen der Messer des Mähwerkes in die ansteigende Flanke der Erhebung nicht verhindern könnten.

Eine solche über die Breite des Mähkopfes sich erstreckende Abtastwalze kann speziell bei einem Mähwerk nicht vor dem Mähwerk angeordnet werden, da dies zum Niederdrücken des zu mähenden Grases führen würde. Die Anordnung hinter dem Mähwerk kann jedoch das Eingraben in eine steil ansteigende Erhebung nicht zuverlässig verhindern.

Punktuell bzw. in Fahrtrichtung linienförmig vor dem Mähwerk anzuordnende kontaktierende Abtastelemente wie Gleitkufen, Tasträder etc., die das Mähgut nicht auf der gesamten Breite niederdrücken, haben sich in der Praxis nicht bewährt, da sie auf Grund der hohen Fahrgeschwindigkeit solcher Mähköpfe von ca. 5 km/h häufig nach hinten umgebogen und abgerissen werden, sobald sie an einem steil aufragenden Hindernis hängen bleiben.

Derartige Lösungen zeigen die EP 0682856 sowie GB 2251536 jeweils in Form von Gleitkufen, deren Höhenlage relativ zum Gehäuse des Mähkopfes detektiert und daraufhin die Höhenlage des Arbeitskopfes nachgeregelt wird.

In beiden Fällen sind diese Gleitkufen seitlich außerhalb des Gehäuses der Mähwelle angeordnet.

Zusätzlich detektiert bei der GB 2251536 die Gleitkufe nicht nur die Höhenlage des Geländes vor der Mähwelle, sondern auch hinter der Mähwelle, da die Gleitkufe von dem Befestigungspunkt vor der Mähwelle bis zu deutlich hinter der Mähwelle durchgeht und dabei die hinteren Enden der beiden Gleitkufen durch eine quer verlaufende Abtastwalze verbunden sind, wodurch auch hinter der Mähwalze wirkende Erhebungen mit detektiert werden.

Weiterhin wurde in der Vergangenheit bereits vorgeschlagen, eine Höhenabtastung mittels berührungslos arbeitender Sensoren durchzuführen, jedoch fehlt es bisher an in der Praxis anwendbaren Gesamtkonzepten und Detaillösungen einer solchen kontaktlosen Bodenabtastung.

### III. Darstellung der Erfindung

### a) Technische Aufgabe

Es ist daher die Aufgabe gemäß der Erfindung, mit bewährten, kostengünstigen, mittels Kontakt arbeitenden, Sensoren die Krafteinwirkung des Untergrundes zu messen, bevor sich der Arbeitskopf mit seinem vorderen Bereich in einer Erhebung des Untergrundes eingräbt.

### b) Lösung der Aufgabe

Diese Aufgabe wird durch die Merkmale des Anspruches 1 gelöst. Vorteilhafte Ausführungsformen ergeben sich aus den Unteransprüchen.

Indem die vom Untergrund in Gegenrichtung zur Fahrtrichtung auf dem Arbeitskopf einwirkende Gegenkraft gemessen wird, die ja besonders bei einem unerwartet auftretenden Hindernis wie einer Erhebung des Untergrundes oder einem Pfosten schnell und drastisch zunimmt, wird die Annäherung bereits der Vorderkante des Arbeitskopfes gegen ein solches Hindernis bemerkt.

Bei den Lösungen, bei denen die Höhenbewegung der hinter dem Gehäuse angeordneten Abtastwalze erst ein Steuersignal auslöst, sind häufig zuvor schon Beschädigungen am Arbeitskopf oder am Auslegerarm erfolgt.

Dabei stehen mehrere Möglichkeiten einzeln oder in Kombination miteinander zur Verfügung, an welcher Stelle und mittels welchen Messprinzips diese Gegenkraft gemessen werden kann, die ja auch im Normalbetrieb immer vorhanden ist allein durch den vom Bewuchs dargestellten Widerstand gegen das Vorwärtsbewegen des Arbeitskopfes in Fahrtrichtung.

Eine Möglichkeit besteht darin, das Einwirken dieser Gegenkraft auf den Auslegerarm zu messen, und zwar möglichst nah am Befestigungspunkt des Arbeitskopfes am Auslegerarm, also bei einem mehrteiligen Auslegerarm insbesondere an dem dem Arbeitskopf nächstliegenden Teil des Auslegerarmes.

Vorzugsweise wird dabei die Gegenkraft gemessen in Form einer Spannungsänderung im Material des Auslegerarmes oder in Form einer Druckänderung in den mit dem Auslegerarm verbundenen und die einzelnen Armteile des Auslegerarmes bewegenden Hydraulikzylindern.

Eine andere Möglichkeit besteht darin, am Drehturm, mittels dessen der Auslegerarm auf dem Trägerfahrzeug um eine vertikale Achse gelagert ist, die durch die Gegenkraft bewirkte Winkeländerung bzw. Wegänderung in Umfangsrichtung zu messen.

Gemessen wird dabei mittels eines Wegsensors oder Positionssensors die Positionsänderung des Auslegerarmes relativ zum Trägerfahrzeug, wobei Weg- und Positionsänderungen insbesondere durch entsprechende Sensoren in den Hydraulikzylindern, die diese Bewegungen bewirken, gemessen werden können.

Dabei kann als Notmaßnahme insbesondere eine Umsteuerung von Hydraulikmedium erfolgen, um Beschädigungen am Arbeitskopf und Auslegerarm zu vermeiden:

Wenn durch Anlauf an einem Hindernis der Druck in demjenigen Hydraulikzylinder, der die Drehbewegung des Auslegerarmes und damit des Drehturmes relativ zum Trägerfahrzeug bewirkt, ansteigt, kann sich ein spezielles Ventil automatisch öffnen und aus diesem Zylinderhydraulikmedium abfließen lassen in demjenigen Hydraulikzylinder, der das Anheben des Arbeitskopfes bewirkt, so dass zumindest bei Hindernissen mit endlicher Höhe die Chance besteht, das Hindernis automatisch und ohne Beschädigung am Arbeitskopf zu überfahren.

Neben diesen indirekten Detektionsmethoden, die nicht Teil dieses Erfindung sind, stehen auch direkte Möglichkeiten, also direkt gemessen am Gehäuse des Arbeitskopfes, zur Verfügung:

Indem ein oder mehrere Tastelemente neben und insbesondere auch vor dem Arbeitskopf an dessen Gehäuse befestigt sind, beispielsweise in Fahrtrichtung verlaufende Sensorleisten, kann die Wirkung der Gegenkraft auf diese Sensorleisten gemessen werden.

Die Messung erfolgt erfindungsgemäß durch Spannungsmessung im Material der Sensorleiste oder durch Messung der Positionsveränderung der Sensorleiste relativ zum Gehäuse.

Das Anordnen der Tastelemente, insbesondere der Sensorleisten, vor dem Gehäuse des Arbeitskopfes ermöglicht es, vor Kollision des Arbeitskopfes mit dem Hindernis dessen Bewegung zu ändern oder zu stoppen.

Um zu vermeiden, dass das vor dem Mähkopf in der Regel hoch aufragende Mähgut niedergedrückt wird und damit schlechter gemäht werden kann, sollten diese Tastelemente eine möglichst geringe Breite in Querrichtung gemessen besitzen und im Falle von Sensorleisten nur in Fahrtrichtung verlaufen, beispielsweise von vorn nach hinten sich kufenförmig vom Gehäuse zum Untergrund absenken und dabei insbesondere über die Vorderkante des Gehäuses vorstehen.

Um nicht mit dem Mähwerk zu kollidieren, können innerhalb der Mähbreite vor dem Gehäuse angeordnete Tastelemente sich nicht allzu weit nach hinten in Richtung Mähwerk erstrecken, seitlich neben dem Gehäuse angeordnete Sensorleisten können sich jedoch entlang des Gehäuses bis zu dessen Hinterkante und darüber hinaus erstrecken, und dort auch mit der an sich bekannten, über die gesamte Breite des Arbeitskopfes sich erstreckenden Abtastwalze verbunden sein.

Je nach Messmethode an dem Tastelement, insbesondere der Sensorleiste, also Spannungsmessung einerseits oder Positionsveränderung zum Gehäuse andererseits, sind diese Sensorleisten elastisch verbiegbar ausgelegt (für das Messen einer Positionsveränderung) oder so stabil, dass eine Lageveränderung relativ zum Gehäuse nicht zu erwarten ist (für Spannungsmessung im Material der Sensorleiste).

Derartige Sensorleisten können ― sofern sie mit der Abtastwalze nicht verbunden sind ― auch zusätzlich zur üblichen Anordnung und auch Messung der Relativbewegung der Abtastwalze zum Gehäuse vorhanden sein, um besonders an der Vorderkante des Gehäuses auftretende Belastungen zu detektieren und damit zeitlich vor der entsprechenden Auslösung der Abtastwalze.

Zusätzlich empfiehlt es sich, die Neigung bezüglich der Querrichtung mit zu detektieren, also Bergauffahrt oder Bergabfahrt, denn dadurch ändert sich die schwerkraftbedingte Krafteinwirkung auch auf den Mähkopf, was von der Steuerung berücksichtigt werden muss, um den tatsächlichen, durch Hindernisse und Mähgut bewirkten, Widerstand errechnen zu können.

### c) Ausführungsbeispiele

Ausführungsformen gemäß der Erfindung sind im Folgenden beispielhaft näher beschrieben. Es zeigen:
- Fig. 1:: Den Arbeitskopf in der Seitenansicht und
- Fig. 2:: Die gesamte Vorrichtung in der Aufsicht.

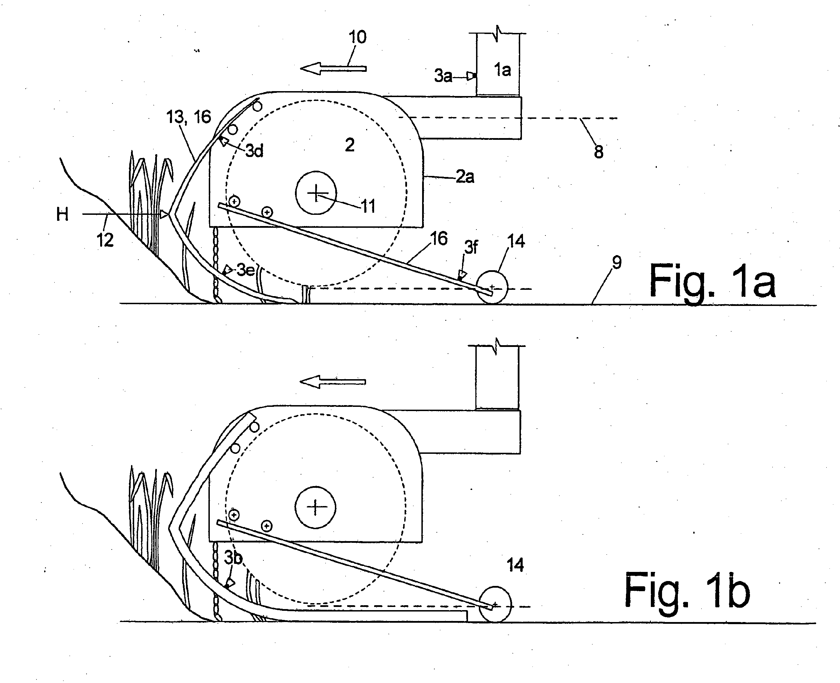

Fig. 1 a zeigt einen Arbeitskopf 2 in der Seitenansicht, der am vorderen Ende eines Ausleger- Armteiles 1 a befestigt ist und dabei sowohl schwenkbar ist um eine in Fahrtrichtung 10 verlaufende Kippachse 8 als auch um eine vertikale Achse.

Bekannt ist dabei bereits die Befestigung einer in Fahrtrichtung 10 hinter dem Arbeitskopf 2 quer verlaufenden Abtastwalze 14 am Gehäuse 2a mittels Federstahl-Stäben 16. Dabei wird schon bisher die Relativbewegung in vertikaler Richtung der Abtastwalze 14 gegenüber dem Gehäuse 2a detektiert, beispielsweise durch einen am Federstahl 16 angeordneten Sensor 3f, der die Spannung im Federstahl misst oder auch den Abstand zum Gehäuse 2a.

Dabei wird klar, dass sich von vorne gegen das Gehäuse 2a an die Hindernisse H wie etwa eine steile Erhebung des Untergrundes 9, dabei zunächst von der Abtastwalze 14 nicht detektiert werden können, und somit der Arbeitskopf 2 mit der Vorderkante seines Gehäuses 2a und/oder auch mit dem in Gehäuse 2a rotierenden Mähwerk in Kontakt mit dem Hindernis H gerät und dadurch beschädigt werden kann.

Fig. 1a zeigt, wie dies verhindert werden kann:

Im vorderen Bereich ist am Gehäuse 2a eine Sensorleiste 13 befestigt, die bogenförmig gekrümmt oder auch geknickt vom Gehäuse 2a aus nach vorne unten verläuft und damit über die Vorderkante des Gehäuses 2a nach vorne vorsteht, und sich von ihrem vordersten Punkt aus wieder entgegen der Fahrtrichtung ziehend nach hinten erstreckt und dabei nach unten gegen den Untergrund 9 absinkt und diesen vorzugsweise auch erreicht. Dieser Teil ist vorzugsweise als kufenförmig gebogene, also sich dem Untergrund 9 asymptotisch annähernde, Form ausgebildet.

Eine solche Sensorleiste 13 gemäß Fig. 1a ist vorzugsweise aus einem federnden Material, etwa aus Federstahl, gebildet, und an ihrem oberen Ende fest am Gehäuse 2a verbunden.

Beim Annähern von Hindernissen egal ob von vorne, gegen den vordersten Punkt der Sensorleiste 13, oder von unten durch Ansteigen des Untergrundes wird die Sensorleiste 13 verformt, was durch daran angeordnete Sensoren, die insbesondere als separate Sensoren 3d im oberen Bereich und 3e im unteren Bereich vorhanden sein können, detektiert. Es handelt sich dabei vorzugsweise um Spannungssensoren, die die innere Spannung im Material der Sensorleiste 13 messen, beispielsweise im simpelsten Fall um Dehnmessstreifen. Auch Weg- oder Positionssensoren zum Detektieren der Position bzw. Verlagerung gegenüber dem Gehäuse 2a wären möglich.

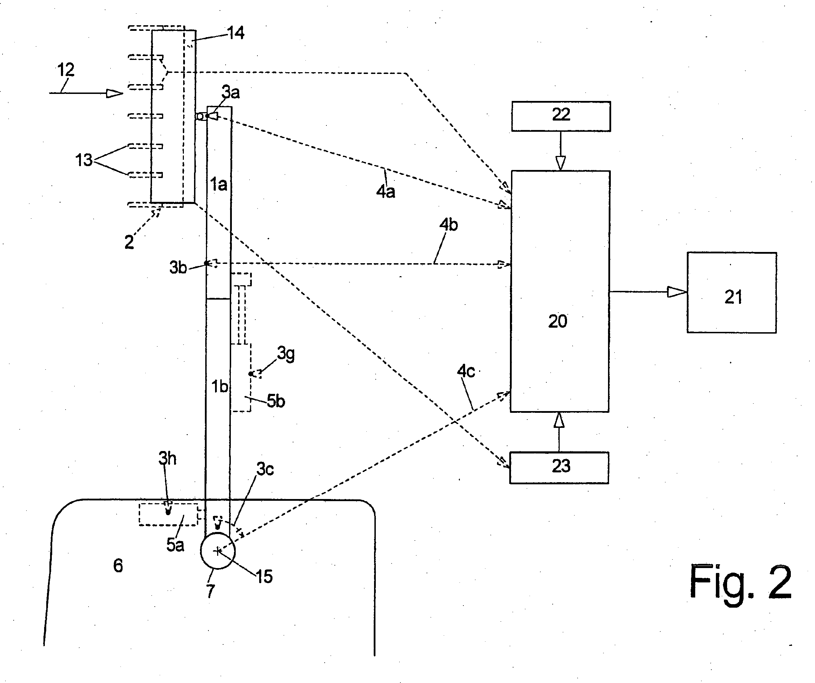

Derartige Sensorleisten 13, die - wie Fig. 2a in der Aufsicht von oben zeigt - hinsichtlich ihrer Breite sehr schmal ausgebildet sind und nicht bis unter das Mähwerk nach hinten laufen, können über die Breite des Arbeitskopfes 2 verteilt mehrfach angeordnet sein oder auch nur seitlich außerhalb des Gehäuses 2a.

Fig. 1b zeigt eine hiervon abweichende Lösung, indem die Sensorleiste 13 nicht elastisch federnd, sondern sehr stabil ausgebildet ist und bei Belastung durch eine Gegenkraft 12 entgegen der Fahrtrichtung oder von unten her sich nicht relativ zum Gehäuse 2a verlagern oder verformen soll, sondern starr bleiben soll.

Mangels erwünschter Verformung und Verlagerung kommen hierfür nur Sensoren 3d, e an der Sensorleiste 13 in Frage, die deren innere Spannung detektieren.

Unabhängig davon, ob die Sensorleiste 13 mehr oder weniger elastisch ausgebildet wird, können die beiden außerhalb der Breite des Gehäuses 2a verlaufenden Sensorleisten 13 sich bis hinter die Hinterkante des Gehäuses 2a nach hinten erstrecken, und dort durch die an sich bekannte, hinter dem Gehäuse quer verlaufende Abtastwalze 14 miteinander verbunden sein, wodurch ein Abtastgebilde entsteht, welches Hindernisse sowohl vor als auch hinter dem Gehäuse 2a gleichzeitig detektieren kann.

Zu bevorzugen ist jedoch die Befestigung der Abtastwalze am Gehäuse unabhängig von den Sensorleisten, um unterscheiden zu können, ob ein momentan auf den Arbeitskopf einwirkendes Hindernis derzeit auf den vorderen Bereich, den hinteren Bereich oder beide Bereiche des Arbeitskopfes gleichzeitig einwirkt.

Neben diesen Messungen direkt am Arbeitskopf 2 zeigt Fig. 2 die Anordnung von Sensoren 3a, b, ... zur indirekten Messung der Gegenkraft 12 am Auslegerarm 1:

So kann ein Sensor 3a an dem den Arbeitskopf 2 tragenden äußersten Armteil 1 a, insbesondere nahe am Befestigungspunkt des Arbeitskopfes 2, angeordnet sein, oder auch weiter hinten am Armteil 1 a, nahe der Verbindungsstelle zum anderen Armteil 1b und damit weiter entfernt von der Verschmutzung und herumfliegende Gegenstände auslösenden Arbeitsvorrichtung im Arbeitskopf 2, beispielsweise einem Mähwerk.

Ein Sensor 3c kann nahe am oder im Drehturm 7 angeordnet sein und die Position bzw. Bewegung des am Drehturm 7 befestigten Armteiles 1 a um die vertikale Achse 15 herum messen.

Zusätzlich oder insbesondere stattdessen können anstelle der Sensoren 3a, b, die primär Spannungen messen oder des Sensors 3c, die eine Position bzw. Verlagerung messen, auch Sensoren 3g, 3h in den Hydraulikzylindern 5a, b angeordnet sein, die beispielsweise die Drehbewegung des Drehturmes 7 um die vertikale Achse 15 bewirken oder die Hubbewegung des äußeren Armteiles 1a relativ zum inneren Armteil 1b und damit das durch eine Gegenkraft 12 ausgelöste zusätzliche Aus- oder Einfahren eines der betroffenen Hydraulikzylindern.

In allen Fällen werden die von den Sensoren 3a, b ... gelieferten Signale 4a, b, ... an die Steuerung 20 der Vorrichtung übertragen, die weiterhin Impulse von dem manuell bedienten Bedienteil 22 erhält und gegebenenfalls auch von einer bereits vorhandenen Separat-Steuerung 23, die schon bisher vorhanden war für die Verarbeitung der durch die Bewegung der Abtastwalze gelieferten Signale, welche durch die übrigen Sensoren und Sensorleisten nachgerüstet werden soll.

Die Steuerung 20 verarbeitet alle eingehenden Signale automatisch zu notwendigen Reaktionen, die in Steuerbefehlen für die an die Steuerung 20 angeschlossenen Hydraulikfunktionen 21 enden.

### BEZUGSZEICHENLISTE

- 1: Auslegerarm
- 1a, b: Armteil
- 2: Arbeitskopf
- 2a: Gehäuse
- 3a, b...: Sensor
- 4a, b...: Signal
- 5a, b...: Hydraulik-Zylinder
- 6: Trägerfahrzeug
- 7: Drehturm
- 8: Kippachse
- 9: Untergrund
- 10: Fahrtrichtung
- 11: Querrichtung
- 12: Gegenkraft
- 13: Sensorleiste
- 14: Abtastwalze
- 15: Vertikale Achse
- 16: Federstahl
- 17:
- 18:
- 19:
- 20: Steuerung
- 21: Hydraulik-Funktionen
- 22: Bedienteil
- 23: Abtastwalzen-Bewegung
- H: Hindernis

## Patentansprüche

1. Verfahren zur Höhensteuerung eines in vorgegebener Sollhöhe an einem Auslegerarm (1) über dem Untergrund (9) in Fahrtrichtung (10) geführten Arbeitskopfes (2), insbesondere Mähkopfes, indem
- die gegen die Arbeitsrichtung (10) vom Untergrund (9) auf den Arbeitskopf (2) einwirkende Gegenkraft (12) mittels wenigstens eines Sensors (3e, f) gemessen wird,
- die ermittelten Signale (4e, f) einer Steuerung (20) zugeführt werden und
- diese die Höhenlage des Arbeitskopfes und/oder Kipplage um eine in Arbeitsrichtung liegende Kippachse (8) verändert,
**dadurch gekennzeichnet, dass**
- die Gegenkraft (12) gemessen wird, indem die Spannung im Material eines als Sensorleiste (13) ausgebildeten und vor dem Gehäuse befestigten Tastelementes ermittelt wird, welches so stabil ist, dass eine Lageveränderung relativ zum Gehäuse nicht zu erwarten ist oder
- die Gegenkraft gemessen wird, indem die Verlagerung des als Sensorleiste (13) ausgebildeten und vor dem Gehäuse befestigten Tastelementes gegenüber dem Gehäuse infolge von Verformung hervorgerufen durch den Untergrund (9) des in Richtung des Untergrundes abfallenden Tastelementes ermittelt wird.

2. Vorrichtung zur Höhensteuerung eines in vorgegebener Sollhöhe an einem Auslegerarm (1) über dem Untergrund (9) in Fahrtrichtung (10) geführten Arbeitskopfes (2), insbesondere Mähkopfes, mit
- wenigstens einem Sensor (3e, f), der die Gegenkraft (12) des Untergrundes auf den Arbeitskopf (2) misst und
- die ermittelten Signale (4e, f) einer Steuerung (20) zuführt, so dass diese die Höhenlage des Arbeitskopfes und/oder Kipplage um eine in Arbeitsrichtung liegende Kippachse, (8) verändern kann,
**dadurch gekennzeichnet, dass**
wenigstens ein als Sensorleiste ausgebildetes Tastelement vor dem Gehäuse (2a) befestigt ist, und der Sensor (3e, 3f) so ausgebildet ist, dass
- er die Gegenkraft (12) mißt, indem er die Spannung im Material des als Sensorleiste (13) ausgebildeten Tastelementes ermittelt, welches so stabil ist, dass eine Lageveränderung relativ zum Gehäuse nicht zu erwarten ist oder
- er die Gegenkraft mißt, indem er die Verlagerung des als Sensorleiste (13) ausgebildeten Tastelementes gegenüber dem Gehäuse infolge von Verformung hervorgerufen durch den Untergrund (9) des in Richtung des Untergrundes abfallenden Tastelementes ermittelt.

3. Vorrichtung nach Anspruch 2,
**dadurch gekennzeichnet, dass**
die Sensorleiste (13) nach vorn kufenförmig ansteigend ausgebildet ist.

4. Vorrichtung nach einem der vorhergehenden Vorrichtungsansprüche, **dadurch gekennzeichnet, dass**
mehrere Sensorleisten (13a, b) vorgesehen sind, die an ihrem hinteren Ende quer zur Arbeitsrichtung (10) verbunden sind, insbesondere fest verbunden sind, und insbesondere über eine quer verlaufende Abtastwalze (14) verbunden sind.

5. Vorrichtung nach einem der vorhergehenden Vorrichtungsansprüche, **dadurch gekennzeichnet, dass**
außer dem die Drehbewegung des Auslegerarmes (1) um eine vertikale Achse (15) bewirkenden ersten Hydraulikzylinder (5a) für das Anheben des Arbeitskopfes (2) ein zweiter Hydraulikzylinder (5b) angeordnet und mit dem ersten Hydraulikzylinder so verschaltet ist, dass ein Wegdrücken des Arbeitskopfes (2) entgegen der Fahrtrichtung (10) durch ein Hindernis (H) auf dem Untergrund (9) zum Umleiten von Hydraulikmedium von dem durch diese Bewegung belasteten ersten Hydraulikzylinder (5a) in den unbelasteten zweiten Hydraulikzylinder (5b) erfolgt.

6. Vorrichtung nach einem der vorhergehenden Vorrichtungsansprüche, **dadurch gekennzeichnet, dass**
am Trägerfahrzeug (6) ein Neigungssensor zum Detektieren der Neigung zur Querrichtung (11) vorhanden ist und mit der Steuerung (20) gekoppelt ist.

## Claims

1. A method for elevation control of an operating head (2), in particular a mowing head that is supported at a predetermined nominal elevation at an outrigger arm (1) above ground (9) in operating direction (10), wherein
- an opposite force (12) impacting the operating head (2) against the driving direction (10) from the ground (9) is measured through at least one sensor (3e, f)
- determined signals (4e, f) are provided to a control (20), and
- the control (20) changes an elevation and/or tilt orientation of the
operating head about a tilt axis (8) oriented in operating direction, **characterized in that**
- the opposite force (12) is measured **in that** a tension is determined in a material of a scan element configured as sensor bar (13) and attached in front of the housing, wherein the scan element is stable enough so that a position change relative to the housing is not to be expected, or
- the opposite force (12) is measured **in that** a movement of the scan element configured as sensor bar (13) and attached in front of the housing is determined relative to the housing due to a of the scan element sloping downward in a direction to the ground (9), wherein the deformation is caused by the ground.

2. A device for elevation control of an operating head (2), in particular a mowing head supported at a predetermined elevation at an outrigger arm (1) above ground (9) in in operating direction (10), comprising.
- at least one sensor (3e, f) measuring an opposite force (12) of the ground (9) upon the operating head (2), and
- wherein the sensor provides determined signals (4e, f) to a control (20), so that the control can change an elevation and/or tilt position of the operating head about a tilt axis (8) oriented in operating direction, **characterized in that**
- at least one scan element that is configured as a sensor bar is attached in front of the housing (2a) and the sensor (3e, f) is configured so that
- the sensor measures the opposite force (12) **in that** it determines a voltage in a material of the scan element configured as sensor bar (13), wherein the scan element is stable enough so that a position change relative to the housing is not to be expected or
- the sensor measures the opposite force **in that** it determines a displacement of the scan element configured as the sensor bar (13) relative to the housing due to a of the scan element sloping downward towards the ground, wherein the deformation is cause by the ground.

3. The device according to claim 2,
**characterized in that**
the sensor bar (13) is configured in forward direction so that it slopes upward like a skid.

4. The device according to one of the preceding device claims **characterized in that**
plural sensor bars (13a, b) are provided which are connected at their rear ends transversal to the operating direction (10), in particular firmly connected, and in particular connected through a transversally extending scanning roller (14).

5. The device according to one of the preceding device claims **characterized in that**
besides a first hydraulic cylinder (5a) for raising the operating head (2) and causing a rotational movement of the outrigger arm (1) about a vertical axis (15),
a second hydraulic cylinder (5b) is arranged and hydraulically connected with the first hydraulic cylinder so that a pressing of the operating head (2) against the driving direction (10) by an obstacle (H) on the ground (9) leads to deviating a hydraulic medium from the first hydraulic cylinder (5a) loaded by the movement into the non-loaded second hydraulic cylinder (5b).

6. The device according to one of the preceding device claims **characterized in that**
an inclination sensor for detecting an inclination relative to a transversal direction (11) is provided at the carrier vehicle (6) and coupled with the control (20).

## Revendications

1. Procédé de commande en hauteur d'une tête de travail (2), en particulier d'une tête de moissonnage, guidée à hauteur théorique prédéterminée sur une flèche (1) au-dessus du sol (9) dans le sens de la marche (10), selon les étapes suivantes
- la force antagoniste (12) opérant à l'encontre du sens de travail (10) du sol (9) sur la tête de travail (2) est mesurée au moyen d'au moins un capteur (3e,f),
- les signaux déterminés (4e,f) sont acheminés à une commande (20),
- laquelle modifie la position en hauteur de la tête de travail et/ou la position de basculement autour d'un axe de basculement (8) qui se situe dans la direction de travail,
**caractérisé en ce que**
- la force antagoniste (12) est mesurée en déterminant la tension dans le matériau d'un élément palpeur conformé en barre de détection (13) et fixé devant le boîtier, lequel élément est assez stable pour ne pas attendre de modification de position par rapport au boîtier ou
- la force antagoniste (12) est mesurée en déterminant le décalage de l'élément palpeur conformé en barre de détection (13) et fixé devant le boîtier par rapport à celui-ci à la suite d'une déformation, provoquée par le sol (9), de l'élément palpeur s'affaissant dans la direction du sol.

2. Dispositif de commande en hauteur d'une tête de travail (2), en particulier d'une tête de moissonnage, guidée à hauteur théorique prédéterminée sur une flèche (1) au-dessus du sol (9) dans le sens de la marche (10), comprenant
- au moins un capteur (3e,f) qui mesure la force antagoniste (12) opérant à l'encontre du sens de travail (10) du sol (9) sur la tête de travail (2), et
- achemine les signaux déterminés (4e,f) à une commande (20) de sorte que celle-ci modifie la position en hauteur de la tête de travail et/ou la position de basculement autour d'un axe de basculement (8) qui se situe dans la direction de travail,
**caractérisé en ce que**
au moins un élément palpeur conformé en barre de détection est fixé devant le boîtier (2a) et le capteur (3e, 3f) est conçu de sorte :
- qu'il mesure la force antagoniste (12) en déterminant la tension du matériau de l'élément palpeur conformé en barre de détection (13) qui est assez stable pour ne pas attendre de modification de position par rapport au boîtier ou
- qu'il mesure la force antagoniste (12) en déterminant le décalage de l'élément palpeur conformé en barre de détection (13) par rapport au boîtier à la suite d'une déformation, provoquée par le sol (9), de l'élément palpeur s'affaissant dans la direction du sol.

3. Dispositif selon la revendication 2,
**caractérisé en ce que**
la barre de détection (13) est conformée en lame montante.

4. Dispositif selon l'une quelconque des revendications précédentes, **caractérisé en ce que**
il est prévu plusieurs barres de détection (13a,b) qui sont reliées, à leur extrémité arrière, transversalement à la direction de travail (10), en particulier reliées en mode fixe et, en particulier, reliées via un rouleau d'exploration (14) s'étendant transversalement.

5. Dispositif selon l'une quelconque des revendications précédentes, **caractérisé en ce que**
il est aménagé, en dehors du premier cylindre hydraulique (5a) assurant le mouvement rotatif du bras (1) autour d'un axe vertical (15) pour le levage de la tête de travail (2), un second cylindre hydraulique (5b) qui est couplé avec le premier cylindre hydraulique de sorte qu'il se produise une déviation de la tête de travail (2) à l'encontre du sens de marche (10) par un obstacle (H) sur le sol (9) pour faire passer du fluide hydraulique du premier cylindre hydraulique (5a) sollicité par ce mouvement au second cylindre hydraulique (5b) non sollicité.

6. Dispositif selon l'une quelconque des revendications précédentes, **caractérisé en ce que**
il est prévu sur le véhicule porteur (6) un capteur d'inclinaison pour détecter l'inclinaison par rapport à la direction transversale (11), qui est couplé à la commande (20).
